# EUROPEAN PATENT APPLICATION

(11) **EP 1 227 479 A2**
(43) Date of publication of application: **31.07.2002**
(21) Application number: 02002296.8
(22) Date of filing: 30.01.2002
(51) Int. Cl.: G11B 19/00

(54) **Information recording and reproducing apparatus, method of appending title information, and program recording medium having recorded title information appending procedure program**

(30) Priority: 30.01.2001 JP 2001021803
(71) Applicant: Pioneer Corporation, Meguro-ku, Tokyo (JP)
(72) Inventor: Denda, Akihiro, c/o Kawagoe Koujou, Pioneer Corp., Kawagoe-shi, Saitama-ken 350-8555 (JP); Nonaka, Yoshiya, c/o Kawagoe Koujou, Pioneer Corp., Kawagoe-shi, Saitama-ken 350-8555 (JP)
(74) Representative: Popp, Eugen, Dr.

(57) **Abstract**

Information can be recorded in an easy-to-use form by appending title information thereto. When audio data is reproduced from an optical disc (2), such as a CD, and recorded into a hard disk, title information corresponding to the audio data is searched through a database region in the hard disk (4), and the retrieved title information is appended to the audio data and recorded into the storage region. When the corresponding title information is not retrieved, flag information indicating "no title information" is appended to the audio data so as to be recorded. When updated title information is provided by way of an optical disc or the like. by additionally recording the updated title information into the database region, the title information for the audio data indicated as "no title information" is automatically searched, and when the corresponding title information is found, the title information thus found is appended to the audio data and recorded into the storage region.

## Description

### BACKGROUND OF THE INVENTION

The present invention relates to an information recording and reproducing apparatus for recording information recorded in an information recording medium, such as a CD (Compact Disc), into another information recording medium, and more particularly to an information recording and reproducing apparatus, a method of appending title information, and a program recording medium having recorded a title information appending procedure program for providing information to be recorded into or recorded in another information recording medium in, for example, an easy-to-handle form.

In order to meet the recent widespread use of multimedia-compatible information recording media, such as CDs, circumstances are being arranged to make it possible to distribute diversified contents including music information. video information, and the like.

Under these circumstances, it becomes more important to improve an apparatus for providing the contents recorded in an information recording medium to the user or the like (hereinafter, collectively referred to as the user) so that it can provide diversified contents while becoming more convenient and easier to manipulate for the user.

Conventionally, as a more convenient and easier-to-manipulate information recording and reproducing apparatus, there has been known an apparatus for recording contents reproduced from a CD into a hard disk, which is a large-capacity information recording medium.

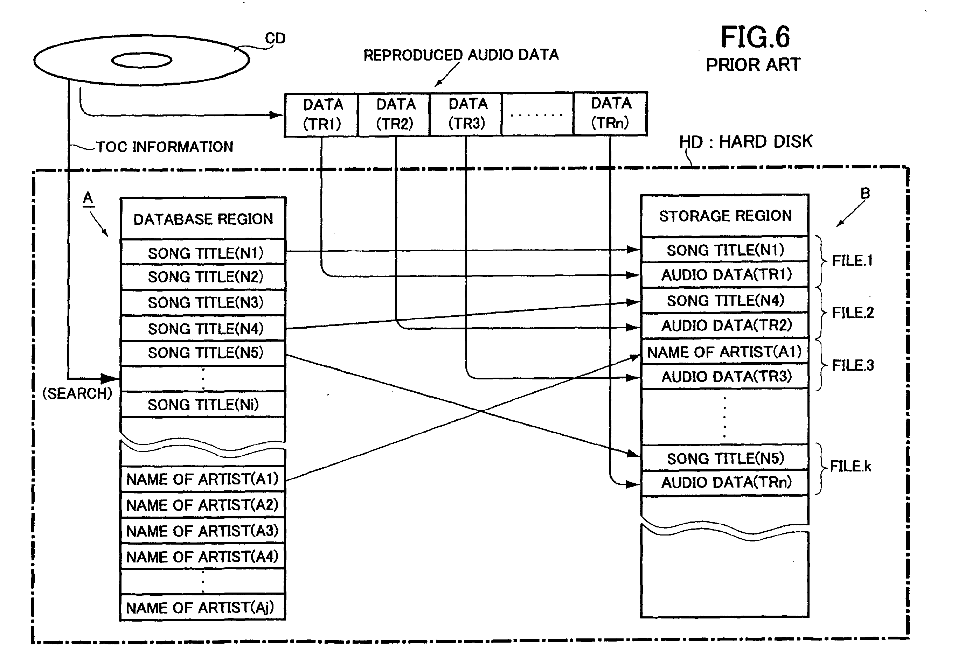

As schematically shown in Fig. 6, the conventional information recording and reproducing apparatus is provided with a hard disk HD having a database region A and a storage region B, and is constituted in such a manner that, when a CD reproducing unit (not shown) reproduces audio data from a CD, a hard disk drive (not shown) records the reproduced audio data into the storage region B in the hard disk HD.

Further, title information, such as "song titles" and "names of artists", is pre-recorded into the database region A, and it is constituted in such a manner that, when the audio data is reproduced from the CD and recorded into the storage region B, the title information related to the audio data, such as "song titles" and "names of artists", is retrieved based on TOC (Table of Contents) information obtained from the CD, and the title information thus retrieved is appended to the audio data so as to be recorded.

To be more specific, in a case where the CD has recorded audio data of more than one song (n songs) distinguished from each other with track numbers TR1 through TRn, and the TOC information including identification information for identifying the respective audio data, it is constituted in such a manner that the title information, such as "song titles" and "names of artists", corresponding to the identification information in the TOC information is obtained by searching through the database region A, and the title information thus obtained is recorded into the storage region B in a one-to-one correspondence with the respective audio data.

For example, the processing as follows is carried out. That is, let "song title (N1)" be the song title of the audio data assigned with the track number TR1, then the song title (N1) and the audio data assigned with the track number TR1 are recorded in a one-to-one correspondence in the form of a file FILE. 1. Also, let "the name of the artist (A1)" be the name of the artist related to the audio data assigned with the track number TR3, then the name of the artist (A1) and the audio data assigned with the track number TR3 are recorded in a one-to-one correspondence in the form of a file FILE. 3.

As has been described, the conventional information recording and reproducing apparatus not only records the audio data reproduced from the CD directly into the storage region B in the hard disk HD, but also appends the title information pre-recorded in the database region A to the audio data so as to be recorded into the storage region B in the hard disk HD. Consequently, the title information is displayed when the user reproduces and listens to the audio data recorded in the storage region B, so that he/she can search for the audio data he/she wishes to reproduce.

According to the conventional information recording and reproducing apparatus, however, in case that the title information, such as "song titles" and "names of artists", pre-recorded in the database region A becomes outdated, when a CD having recorded new songs is reproduced and the audio data is recorded into the storage region B, the title information corresponding to the new songs cannot be obtained by searching through the database region A. Hence, there is a problem that the audio data is recorded without the title information.

Accordingly, when the user reproduces and listens to the audio data recorded in the storage region B, for example. the title information is not displayed, which causes an inconvenience that the user cannot easily search for the audio data he/she wishes to reproduce.

Also, the above processing (to append the title information to the audio data so as to be recorded, or to record the audio data without appending the title information when corresponding title information cannot be retrieved) is carried out during a series of operations involved in the reproducing and recording processing for recording the audio data into the storage region B while the audio data is being reproduced from the CD.

Hence, if the audio data is recorded with no title information being appended, in order eliminate the aforementioned inconvenience, the user has to append the title information to the recorded audio data by a follow-up operation. However, such a follow-up operation is problematic because it requires quite tedious manipulations. For example, when the user tries to append the self-generated title information to the audio data recorded in the storage region B by using an editor function pre-installed in the conventional information recording and reproducing apparatus, he/she has to go through time-wasting manual input involving the typing of a large number of manipulation keys provided to the information recording and reproducing apparatus, which raises a problem in terms of ease of manipulation and convenience.

### SUMMARY OF THE INVENTION

The present invention therefore has objects to overcome the conventional problems and to provide an information recording and reproducing apparatus, a method of appending title information, and a program recording medium having recorded a title information appending procedure program for providing information to be recorded into or recorded in a hard disk or the like in an easy-to-handle form for the user.

In order to achieve the above and other objects, an information recording and reproducing apparatus of the present invention is an information recording and reproducing apparatus for recording program information reproduced from an information recording medium or program information supplied via a communication network into recording device, characterized by including: a first recording unit, provided in the recording device, for recording the program information reproduced from the information recording medium or the program information supplied via the communication network; a second recording unit, provided in the recording device, for pre-recording title information corresponding to the program information; and control means for, when the program information is recorded into the first recording unit, (a) obtaining management information for managing the program information recorded in the information recording medium or supplied via the communication network, (b) in case that the title information corresponding to the program information is obtained by searching through the second recording unit based on the management information obtained, appending the title information obtained to the program information so as to be recorded into the first recording unit, and (c) in case that the title information corresponding to the program information is not obtained by searching through the second recording unit based on the management information obtained, appending information indicating an absence of the title information to the program information so as to be recorded into the first recording unit.

According to the information recording and reproducing apparatus constituted as above, the program information reproduced from the information recording medium or the program information supplied via the communication network is recorded into the recording device. When the program information reproduced from the information recording medium is recorded into the recording device, the title information pre-recorded in the second recording unit is searched. In case that the title information corresponding to the program information is found, the title information is appended to the program information so as to be recorded into the first recording unit. In case that the corresponding title information is not found, the information indicating the absence of the title information is appended to the program information so as to be recorded into the first recording unit. Consequently, it is possible to distinguish the program information not appended with the title information from the program information appended with the title information.

Also, when the program information supplied via the communication network is recorded into the first recording unit, the title information pre-recorded in the second recording unit is searched as well. In case that the title information corresponding to the program information is found, the title information is appended to the program information so as to be recorded into the first recording unit. In case that the corresponding title information is not found, the information indicating the absence of the title information is appended to the program information so as to be recorded into the first recording unit. Consequently, it is possible to distinguish the program information not appended with the title information from the program information appended with the title information.

Also, the information recording and reproducing apparatus is characterized in that, when updated title information is supplied by way of an information recording medium or via the communication network, the control means records the updated title information into the second recording unit, and searches through the second recording unit after updating for the title information corresponding to the program information appended with the information indicating the absence of the title information, and when the title information corresponding to the program information is obtained, it appends the title information obtained to the program information so as to be recorded into the first recording unit.

According to the above constitution, the title information corresponding to the program information appended with the information indicating the absence of the title information is automatically searched through the updated title information recorded in the second recording unit. Then, when the title information is found, the title information is appended to the program information so as to be recorded into the first recording unit, whereby the title information is appended to the program information to which the title information has not been appended. By automatically appending the title information to the program information to which the title information has not been appended in this manner, not only can the user save the labor of appending the title information by himself/herself, but also it is possible to provide more convenient use for the user by making it easier to search for the program information by allowing the search based on the title information.

Also, the information recording and reproducing apparatus is characterized in that the control means searches through the second recording unit after updating based on the management information for managing the program information appended with the information indicating the absence of the title information.

According to the above constitution, by using the management information as so-called search mediation information for searching the title information corresponding to the program information, it is possible to improve the search accuracy of the title information corresponding to the program information.

Also, the information recording and reproducing apparatus is characterized by further including reproducing means for reproducing the information recording medium having recorded the updated title information, or receiving means for receiving the updated title information supplied via the communication network.

According to the above constitution, it is possible to obtain the updated title information as the information recorded in an information recording medium, or receive the updated title information via the communication network instead of being supplied with the updated title information by way of the information recording medium.

In order to achieve the above and other objects, a method of appending title information of the present invention is a method of appending title information for appending title information to program information reproduced from an information recording medium or program information supplied via a communication network so as to be recorded into recording device, characterized by including: the step of recording the program information reproduced from the information recording medium or the program information supplied via the communication network into a first recording unit provided in the recording device, the step of, when the program information is recorded into the first recording unit, obtaining management information for managing the program information recorded in the information recording medium or supplied via the communication network, and, based on the management information obtained, searching through a second recording unit, provided in the recording device, for pre-recording title information corresponding to the program information; and the step of appending the title information to the program information so as to be recorded into the first recording unit when the title information corresponding to the program information is obtained in the step of searching, and appending information indicating an absence of the title information to the program information so as to be recorded into the first recording unit when the title information corresponding to the program information is not obtained in the step of searching.

Also, the method of appending title information is characterized by further including: the step of obtaining updated title information when the updated title information is supplied by way of an information recording medium or via the communication network; the step of recording the updated title information obtained into the second recording unit. and searching through the second recording unit after updating for the title information corresponding to the program information appended with the information indicating the absence of the title information; and the step of appending the title information to the program information so as to be recorded into the first recording unit when the title information corresponding to the program information is obtained by searching through the second recording unit after updating.

Also, the method of appending title information is characterized in that, in the step of searching through the second recording unit after updating, the second recording unit after updating is searched through based on the management information for managing the program information appended with the information indicating the absence of the title information.

According to the method of appending title information, when the program information reproduced from the information recording medium or the program information supplied via the communication network is recorded into the recording device, the title information pre-recorded in the second recording unit is searched. In case that the corresponding title information corresponding to the program information is found, the title information is appended to the program information so as to be recorded into the first recording unit. In case that the title information is not found, the information indicating the absence of the title information is appended to the program information so as to be recorded into the first recording unit. Consequently, it is possible to distinguish the program information not appended with the title information from the program information appended with the title information.

Also, the title information corresponding to the program information appended with the information indicating the absence of the title information is automatically searched through the updated title information recorded in the second recording unit. Then, when the title information is found, the title information is appended to the program information so as to be recorded into the first recording unit, whereby the title information is appended to the program information to which the title information has not been appended. By automatically appending the title information to the program information to which the title information has not been appended in this manner, not only can the user save the labor of appending the title information by himself/herself, but also it is possible to provide more convenient use for the user by making it easier to search for the program information by allowing the search based on the title information.

Also, by using the management information as so-called search mediation information for searching the title information corresponding to the program information, it is possible to improve the search accuracy of the title information corresponding to the program information.

In order to achieve the above and other objeots, a program recording medium having recorded a title information appending procedure program of the present invention is a program recording medium having recorded a title information appending procedure program for allowing an computer to execute processing to append title information to program information reproduced from an information recording medium or program information supplied via a communication network so as to be recorded into recording device, characterized in that a title information appending procedure includes: the procedural step of recording the program information reproduced from the information recording medium or the program information supplied via the communication network into a first recording unit provided in the recording device; the procedural step of, when the program information is recorded into the first recording unit, obtaining management information for managing the program information recorded in the information recording medium or supplied via the communication network, and, based on the management information obtained, searching through a second recording unit, provided in the recording device, for pre-recording the title information corresponding to the program information; and the procedural step of appending the title information to the program information so as to be recorded into the first recording unit when the title information corresponding to the program information is obtained in the procedural step of searching, and appending information indicating an absence of the title information to the program information so as to be recorded into the first recording unit when the title information corresponding to the program information is not obtained in the procedural step of searching.

The program recording medium having recorded a title information appending procedure program is characterized by further including: the procedural step of obtaining updated title information when the updated title information is supplied by way of an information recording medium or via the communication network; the procedural step of recording the updated title information obtained into the second recording unit, and searching through the second recording unit after updating for the title information corresponding to the program information appended with the information indicating the absence of the title information: and the procedural step of appending the title information to the program information so as to be recorded into the first recording unit when the title information corresponding to the program information is obtained by searching through the second recording unit after updating.

Also, the program recording medium having recorded a title information appending procedure program is characterized in that the procedural step of searching through the second recording unit after updating includes the procedural step of searching through the second recording unit after updating based on the management information for managing the program information appended with the information indicating the absence of the title information.

According to the program recording medium having recorded the title information appending procedure program, by inserting the program recording medium into an electronic device provided with a microcomputer and furnished with an information recording and reproducing function, such as a personal computer, to install the title information appending procedure program, and then by allowing the microcomputer or the like to execute the title information appending procedure program, it is possible to provide the electronic device with the same function as the one provided to a dedicated information recording and reproducing apparatus.

### BRIEF DESCRIPTION OF THE DRAWINGS

These and other objects and advantages of the present invention will become clear from the following description with reference to the accompanying drawings, wherein:
Fig. 1 is a block diagram depicting an constitution of an information recording and reproducing apparatus according to one embodiment of the present invention;
Fig. 2 is a flowchart explaining an operation when an optical disc having recorded music, such as a music CD, is reproduced for recording;
Fig. 3 is a flowchart explaining an operation when title information is appended to audio data by updated title information;
Fig. 4 is a view explaining a state of audio data or the like recorded in a storage region when the operation proceeds according to the flowchart in Fig. 2;
Fig. 5 is a view explaining a state of audio data or the like recorded in a storage region when the operation proceeds according to the flowchart in Fig. 3; and
Fig. 6 is a view explaining problems with a conventional information recording and reproducing apparatus.

### DETAILED DESCRIPTION OF THE PREFERRED EMBODIMENTS

Embodiment of the present invention will be described with reference to the accompanying drawings. Herein, the following description will describe, as one embodiment, an information recording and reproducing apparatus for reproducing program information, such as audio data, recorded in a CD and recording the same into a hard disk, which is a large-capacity information recording medium, or for reproducing program information such as audio data distributed via a communication network, and recording the same into a hard disk which is a large-capacity information recording medium.

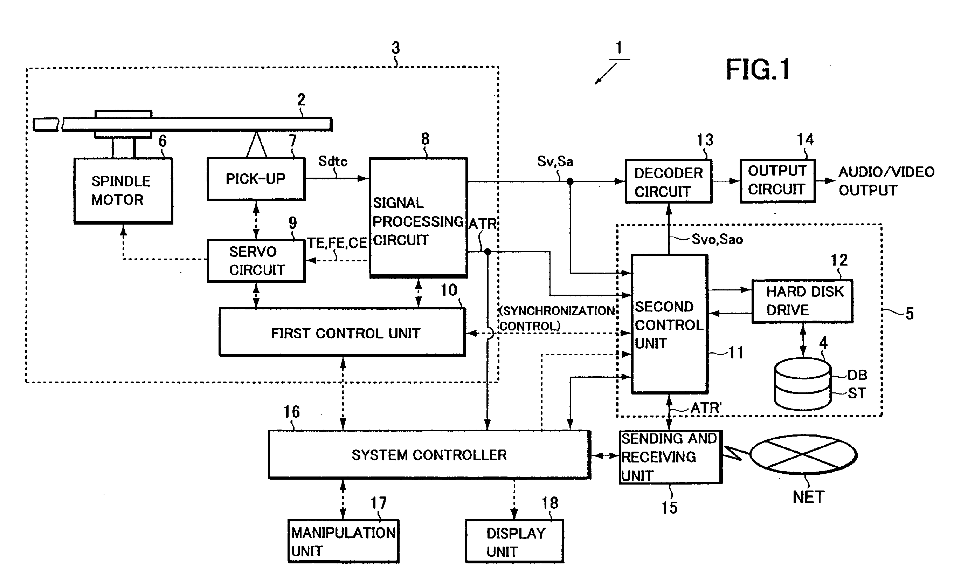

With referring to a block diagram shown in Fig. 1. an information recording and reproducing apparatus 1 of the present embodiment includes a reproducing unit 3 for reproducing information from a CD (hereinafter, referred to as an optical disc) 2, and a recording and reproducing unit 5 for recording reproduced information into a hard disk 4 as another information recording medium.

The reproducing unit 3 includes a spindle motor 6 for rotating the optical disc 2 at a predetermined linear velocity, a pick-up 7 for optically reading out information recorded in the optical disc 2 and converting the same into an electric signal Sdtc so as to be outputted, a signal processing unit 8, a servo circuit 9, and a first control unit 10 for controlling an overall operation of the reproducing unit 3 in reproducing the optical disc 2.

The recording and reproducing unit 5 includes a second control unit 11 for controlling an overall operation of the recording and reproducing unit 5, and a hard disk drive 12 for recording information into the hard disk 4 and for reproducing information recorded in the hard disk 4.

The signal processing unit 8 is provided with a matrix circuit, a decoding circuit, and a stream separation circuit, none of which is shown in the drawing. The matrix circuit generates an RF signal by subjecting the electric signal Sdtc outputted from the pick-up 7 to signal processing, and detects a tracking error TE and a focus error FE of the pick-up 7 with respect to the optical disc 2, so that it allows the servo circuit 9 to effect servo control to compensate each of these errors caused in the pick-up 7 by supplying the servo circuit 9 with a focus error signal FE and a tracking error signal TE thus detected.

The decoding circuit converts the RF signal into digital data, and handles decoding and error correction processing according to the data format of the optical disc 2. Then, the stream separation circuit separates video data Sv and audio data Sa both outputted from the decoding circuit, and outputs the separate individual video data Sv and audio data Sa to a decoder circuit 13. In the case of reproducing an optical disc having recorded audio information alone, such as a music CD, the stream separation circuit separates the audio data Sa alone, and the decoder circuit 13 is provided with the audio data Sa.

Also, the decoding circuit detects an error in rotation of the spindle motor 6 by handling the decoding and error correction processing, and allows the servo circuit 9 to effect servo control on a rotational speed of the spindle motor 6 by supplying the servo circuit 9 with a rotation error signal CE thus detected. Also, the decoding circuit extracts TOC information, which is management data ATR, from the RF signal generated from the information recorded in the lead-in area of the optical disc 2 and read out by the pick-up 7, and extracts and supplies the TOC information. or the management data ATR, to the second control unit 11 and to a system controller 16.

Upon supply of the audio data Sa or video data Sv from the signal processing unit 8, the decoder circuit 13 decodes the audio data Sa, which has been compressed by the MP3, for example, and outputs the result to an output circuit 14, or decodes the video data Sv, which has been compressed by the MPEG. for example, and outputs the result to the output circuit 14. The decoding processing is handled in the same manner as above when the hard disk drive 12 reproduces the audio data or video data recorded in the hard disk 4 and supplies the reproduced audio data Sao or video data Svo to the decoder circuit 13.

The output circuit 14 is a circuit for generating an audio/video output, and it outputs decoded audio data in the form of digital data, or converts the same into an analog audio signal by means of digital-to-analog conversion so as to be outputted. Also, the output circuit 14 outputs decoded video data in the form of digital data, or converts the same into a composite signal including the audio data so as to be outputted.

Upon supply of the video data Sv or audio data Sa from the signal processing unit 8 when reproducing a disc, the second control unit 11 provided in the recording and reproducing unit 5 subjects the supplied data to predetermined data conversion according to the recording format of the hard disk 4 and supplies the result to the hard disk drive 12, whereby the video data Sv or audio data Sa is recorded into a storage region ST in the hard disk 4. In the case of reproducing the aforementioned optical disc having recorded audio information alone, such as a music CD, the stream separation circuit in the signal processing unit 8 supplies the second control unit 11 with the audio data Sa alone, and as a result, the second control unit 11 subjects the audio data Sa to the predetermined data conversion and records the result into the storage region ST.

Further, when the second control unit 11 records the video data Sv or audio data Sa into the hard disk 4, it searches through a database region DB, which is a first recording unit in the hard disk 4, based on the management data ATR supplied from the signal processing unit 8, whereby it obtains title information corresponding to identification information included in the management data ATR, and appends the title information thus obtained to the video data Sv or audio data Sa so as to be recorded into the storage region ST, which is a second recording unit.

The management data ATR referred to herein is the TOC (Table of Contents) information and the like recorded in the optical disc 2. The information recording and reproducing apparatus 1 is constituted in such a manner that it handles attribute information included in the TOC information, such as a total number of songs recorded in the optical disc 2, a total recording time, and the start position of each song (time information specifying the start position of each title), as the identification information, and searches for the title information recorded in the database region DB based on the identification information.

Also, information equivalent to the management data ATR recorded in the optical disc 2 is recorded into the database region DB in a correspondence with the title information, and the title information is searched with reference to this information.

Further, although it will be described more in detail below, it is constituted in such a manner that, when an optical disc having recorded updated title information is inserted into the reproducing unit 3 and the updated title information is reproduced and supplied to the second control unit 11 from the signal processing unit 8, the second control unit 11 records the updated title information into the database region DB. It is also possible to obtain the updated title information through a sending and receiving unit 15 linked to a communication network NET, such as the Internet, as will be described below, and when the updated title information is supplied from the sending and receiving unit 15, the second control unit 11 also records the updated title information into the database region DB in the same manner as the case of the optical disc.

As has been discussed, the second control unit 11 is constituted in such a manner that it obtains the updated title information from an optical disc as an information recording medium, or obtains the updated title information provided from a music distributor or the like linked to the communication network NET, such as the Internet, and records the same into the database region DB.

It should be noted that when the title information is updated, the management data ATR related to the title information to be updated is also recorded.

The title information referred to herein is the information produced by arbitrarily selecting one or more kinds of information from a plurality kinds of information as follows. That is, the title information is composed of "a disc title" specifying the name of the disc given to the optical disc, "phonetic symbols (pronunciations) of the disc title", "the name of an artist" identifying a copyright holder of the optical disc, "phonetic symbols of the name of the artist of the disc", "a genre" of music or the like recorded in the optical disc, "the year of the sales of the optical disc", "track titles" assigned to the respective track numbers, such as song titles, and "phonetic symbols of the track titles", "the names of artists of the respective track titles", "phonetic symbols of the names of artists of the respective track titles", "genres of the respective track titles", etc.

The title information is updated as needed on the producer's side of the optical disc, and provided to the user by way of an information recording medium, such as an optical disc, or via the communication network, such as the Internet, as discussed above, so that the user who receives such provision can record the latest title information into the database region DB in the hard disk 4.

Further, the information recording and reproducing apparatus 1 is provided with the system controller 16, and a manipulation unit 17 and a display unit 18 both connected to the system controller 16.

The system controller 16 directs the first control unit 10 to control an operation of the reproducing unit 3, and directs the second control unit 11 to control an operation of the recording and reproducing unit 5. The system controller 16 also controls an operation of the sending and receiving unit 15, and further, it is responsible for the central-control of an overall operation of the information recording and reproducing apparatus 1. Also, when the reproducing unit 3 reproduces the optical disc 2 and the recording and reproducing unit 5 records the reproduced information into the hard disk 4, the system controller 16 directs the first control unit 10 and the second control unit 11 to perform the reproducing and recording processing in sync with each other.

The manipulation unit 17 is provided with various kinds of manipulation keys to allow the user to specify a desired operation to the system controller 16, and the display unit 18 displays a menu or the like to urge the user to proceed with his/her desired manipulation based on the menu display information supplied from the system controller 16.

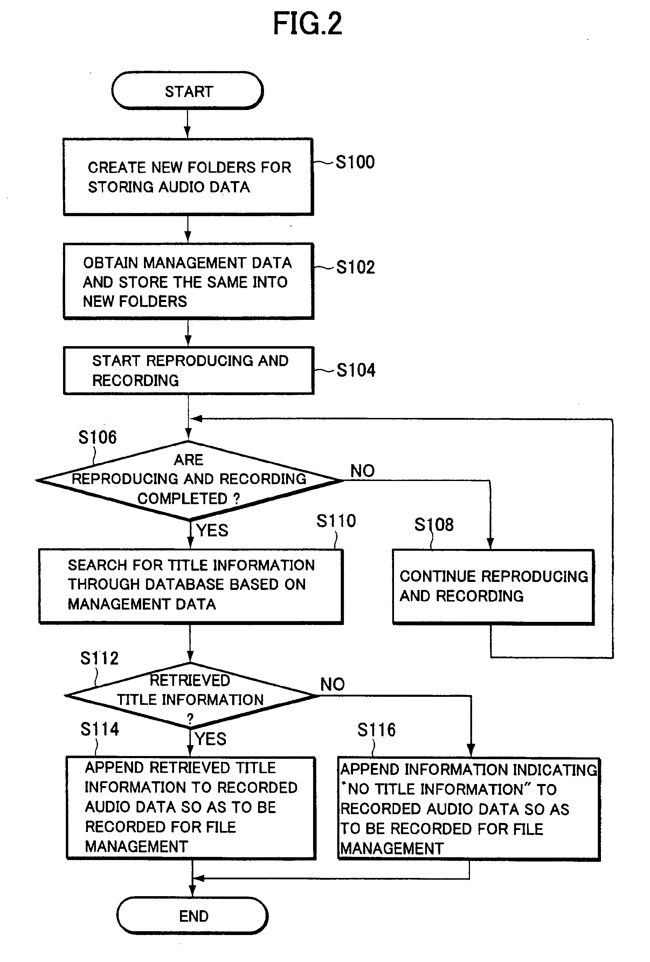

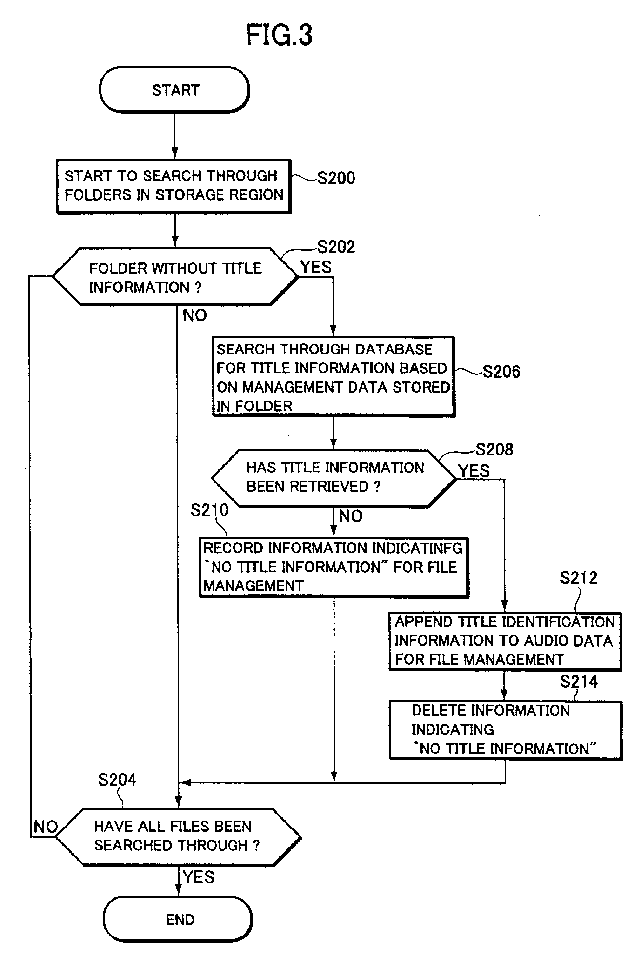

Next, the following description will describe an operation of the information recording and reproducing apparatus 1 constituted in the above manner, with reference to the flowcharts in Figs. 2 and 3. Fig. 2 shows an operation in case that the reproducing unit 3 reproduces the optical disc 2 having recorded music, such as a music CD, and the recording and reproducing unit 5 records the reproduced information into the hard disk 4. Fig. 3 shows an operation when the title information is appended to the audio data by the updated title information.

Referring to Fig. 2, when the user insets the optical disc 2 into the reproducing unit 3. and manipulates the manipulation unit 17 to specify the start of the reproducing and recording processing, the second control unit 11 creates new folders for storing the respective audio data in the storage region ST within the hard disk 4 (Step S100). Further, the reproducing unit 3 reads out the TOC information recorded in the lead-in area of the optical disc 2 and supplies the same to the second control unit 11 as the management data ATR, whereby the management data ATR is recorded into the hard disk 4 as being stored in the folders (Step S102).

Then. the intended reproducing and recording processing is started after the pre-treatment in Steps S100 and S102 is completed. To be more specific, reproducing of the audio data recorded in the program area of the optical disc 2 is started, while at the same time, the reproduced audio data Sa is recorded into the hard disk 4 as being stored in the folders (Step S104).

Then. in Step S106, whether the reproducing of the audio data recorded in the optical disc 2 and the recording into the hard disk 4 have been completed is checked, and if not, the reproducing and recording processing is continued in Step S108, so that the processing is repeated from Step S106.

When it is judged that the reproducing and the recording of the audio data have been completed in Step S106, the flow proceeds to Step S110, wherein the title information recorded in the database region DB is searched based on the management data ATR. In other words. the second control unit 11 obtains the management data ATR recorded in the hard disk 4 as being stored in the folders, and searches for the title information recorded in the database region DB based on the identification information, such as a total number of songs, a total recording time, and the start positions of the respective songs, included in the management data ATR.

Then, in Step S112, whether the title information can be obtained by the search processing or not is judged. In case that the title information can be obtained, the flow proceeds to Step S114, wherein the title information thus obtained is appended to the audio data stored in the folders so as to be recorded into the storage region ST for file management. In short. the audio data and the title information are stored in the folders and managed by file management.

In case that it is judged that the title information cannot be obtained in S112, the flow proceeds to Step S116, wherein flag information (code is omitted herein) indicating "no title information" is appended to the audio data stored in the folders so as to be recorded for file management.

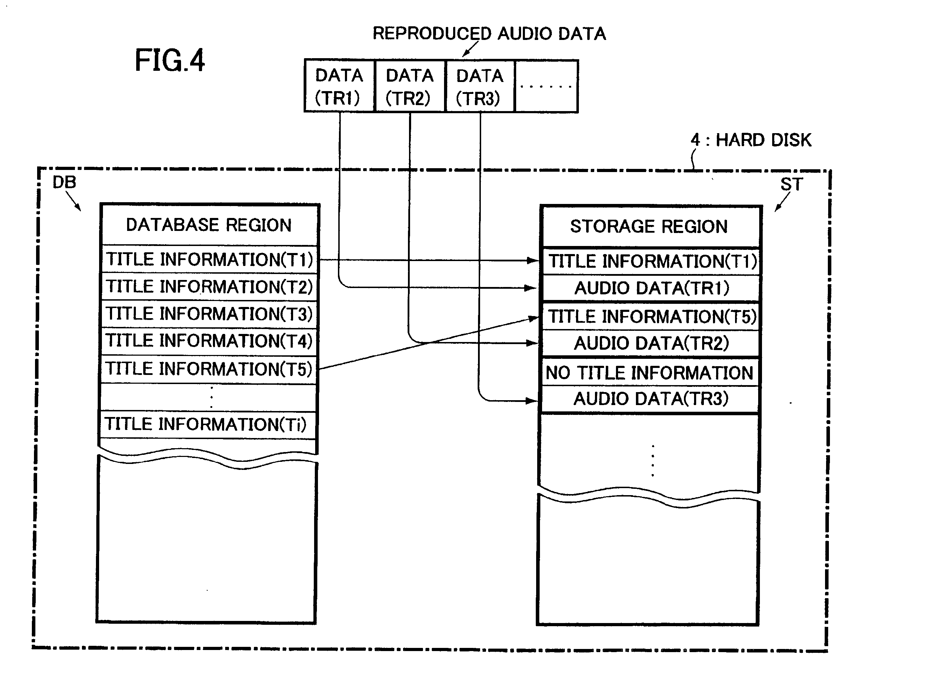

In other words, as is schematically shown in Fig. 4, for example, when the title information (T1) corresponding to the audio data assigned with the track number TR1 and the title information (T5) corresponding to the audio data assigned with the track number TR2 are retrieved, the respective audio data and the respective corresponding title information (T1) and (T5) are recorded into the storage region ST as being stored in their own folders in a one-to-one correspondence. When the title information corresponding to the audio data assigned with the track number TR3 cannot be retrieved, the audio data and the flag information indicating "no title information" are recorded into the storage region ST as being stored in their own folder. Hence, it is possible to manage the audio data and the absence or presence of the title information for the respective folders.

Then, when the processing in Step S114 or S116 is completed, the reproducing and recording processing to record (that is, sound-record) the audio data Sa reproduced from the optical disc 2 into the storage region ST in the hard disk 4 is terminated.

In this manner, by appending the title information to the audio data so as to be recorded when the title information can be retrieved, and by appending the flag information indicating "no title information" to the audio data so as to be recorded when the title information cannot be retrieved, it is possible to distinguish the audio data appended with the title information from the audio data not appended with the title information.

In other words, the user is allowed to display the title information on the display unit 18 by manipulating the predetermined manipulation keys in the manipulation unit 17 when he/she reproduces and listens to the audio data recorded in the storage region ST, or to search for the desired audio data by reviewing the title information displayed on the display unit 18. Also, when the user confirms that the audio data not appended with the title information is recorded in the storage region ST while he/she is reviewing the display content on the display unit 18, he/she can decide whether the title information needs to be updated or not.

The above description described the case where the audio data is reproduced from the optical disc 2, such as a CD, and recorded into the hard disk 4. In a case where the audio data is received via the communication network NET, such as the Internet, and recorded (downloaded) into the hard disk 4, the processing is carried out by the operation as follows.

That is, when the user manipulates the manipulation unit 17 and enters a command for a distribution from a desired provider or the like, the system controller 16 activates the sending and receiving unit 15 at the command. Then, when the audio data is distributed, the second control unit 11 obtains the audio data through the sending and receiving unit 15 and records the same into the storage region ST in the hard disk 4. At this point, like in Step S100 in Fig. 2, new folders are created, so that the distributed audio data is recorded as being stored in the folders. Also, when management data ATR', which is the same as the management data ATR, is distributed, like in Step S102 in Fig. 2, the management data ATR' is also recorded as being stored in the folders.

Then, when all the audio data has been recorded, the second control unit 11 performs the same processing as the one in Step S110 in Fig. 2, so that it searches for the title information through the database DB based on the management data ATR', and when the title information can be retrieved. like in Step S114 in Fig. 2, it appends the title information thus retrieved (obtained) to the audio data stored in the folders so as to be recorded into the storage region ST for file management. In short. the audio data and the title information are stored in the folders and managed by file management. When the title information cannot be retrieved (obtained), like in Step S116 in Fig. 2, the second control unit 11 appends the flag information indicating "no title information" to the audio data stored in the folders for file management.

As has been discussed, the information recording and reproducing apparatus 1 manages the audio data by file management by performing the same processing whether the audio data is reproduced from the optical disc 2 and recorded into the hard disk 4 or the audio data is distributed via the communication network NET and recorded into the hard disk 4.

Next, the following description will describe, with reference to Fig. 3, an operation when the title information is appended to the audio data by updated title information.

Herein, it is a precondition for the title information appending operation that the user records the updated title information into the database region DB in the hard disk 4. In other word, as has been described above, the user installs (additionally records) the updated title information into the database region DB by inserting an optical disc having recorded the updated title information into the reproducing unit 3 and reproducing the same, or downloads (additionally records) the updated title information into the database region DB by receiving the updated title information distributed via the communication network NET, such as the Internet, in advance.

Thus, when the updated title information has been recoded into the database region DB, the second control unit 11 automatically starts title information automatic appending processing shown in Fig. 3.

Initially in Step S200, the processing to search through each folder recorded in the storage region ST is started, and in Step S202, folders having the title information and folders appended with the flag information indicating "no title information" are successively distinguished.

When the folder appended with the title information is detected in Step S202 (in the case of NO), the flow proceeds to Step S204, wherein whether all the folders have been searched or not is judged. If not, the flow returns to Step S202 and repeats the processing to search through the next folder.

When the folder appended with the flag information indicating "no title information" is detected in Step S202 (in the case of YES), the flow proceeds to Step S206, wherein the title information is searched through the database region DB based on the management data ATR or ATR' stored in the folder. In case that the audio data has never been distributed via the comunication network NET, the search based on the control data ATR' is not conducted, and the search is conducted based on the management data ATR which is obtained by reproducing the optical disc and recorded into the hard disk 4.

Then, in Step S208, whether the title information corresponding to the management data ATR (or ATR') is found or not by the search through the database DB is judged, and if not, the flow proceeds to Step S210, wherein the flag information indicating "no title information" is stored into the folder, after which the flow proceeds to Step S204. In other words, in case that the corresponding title information is not found by the updated title information, either, the audio data appended with the flag information indicating "no title information" remains in the same recorded state.

When the title information corresponding to the management data ATR (or ATR') is found in Step S208, the flow proceeds to Step S212, and the title information is appended to the audio data and stored in the folder so as to be recorded. Further, in Step S214, the flag information indicating "no title information" stored in the folder is deleted, after which the flow proceeds to Step S204.

Then, processing from Steps S202 to S214 is repeated for all the folders according to the judging condition specified above, and when it is judged that all the folders have been searched through in Step S204, the title information automatic appending processing is terminated.

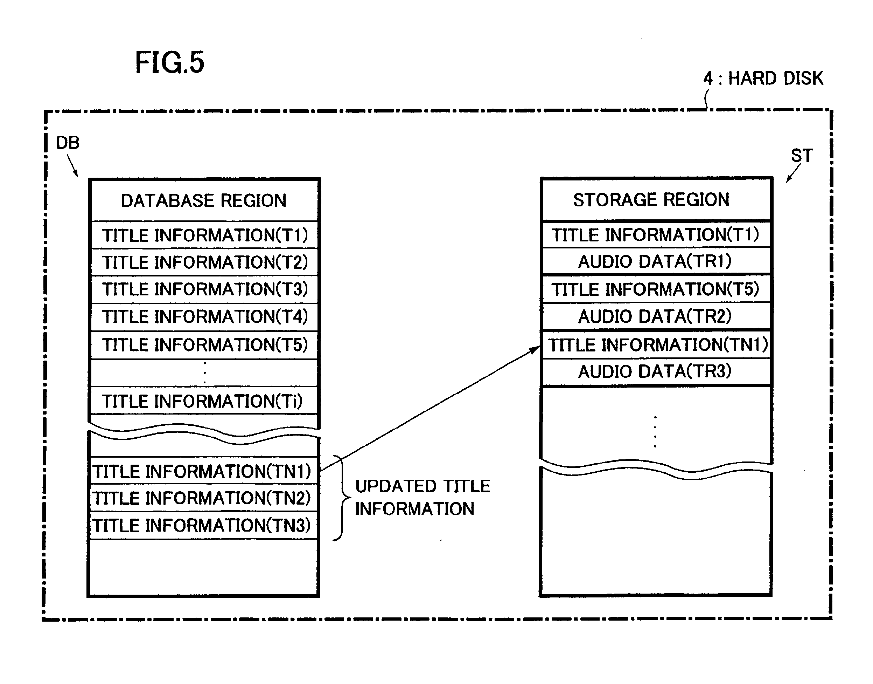

When the title information automatic appending processing is terminated in this manner, if the title information corresponding to the audio data assigned with the track number TR3 shown in Fig. 4, that is, the audio data appended with the flag information indicating "no title information", is found in the updated title information. for example, then the title information thus found is automatically appended to the audio data. For example, as shown in Fig. 5, of the updated title information recorded in the database DB. in case that the title information (TN1) corresponds to the audio data assigned with the track number TR3, then the flag information indicating "no title information" is deleted from the folder, and the title information (TN1) is appended to the audio data so as to be recorded.

As has been discussed, according to the information recording and reproducing apparatus 1 of the present embodiment, when the audio data to be recorded into the storage region ST is not appended with the title information because there is no corresponding title information in the database region DB or any other reason, e.g., outdated information, the flag information indicating "no title information" is appended to the audio data so as to be recorded and managed. When the updated title information is recorded into the database region DB, the title information corresponding to the audio data appended with the flag information indicating "no title information" is automatically searched through the updated title information, and when the corresponding information is found, the title information thus found is appended to the audio data so as to be recorded and managed. Hence, the user does not have to go through time-consuming manipulations, such as manual input of the title information or the like in the text format. Consequently, it is possible to provide the user with more convenient use and easier manipulation.

According to the description of the present embodiment, it is constituted in such a manner that the title information automatic appending processing automatically starts when the updated title information is installed or downloaded and recorded into the database region DB. It should be appreciated, however, that it may be constituted in such a manner that after the updated title information is recorded into the database region DB, a menu is displayed on the display unit 18 to urge the user to specify whether the title information automatic appending processing should be started or not, so that the title information automatic appending processing is started when the start of the processing is specified on the menu display.

Alternatively, command manipulation keys or the like to start the title information automatic appending processing may be provided to the manipulation unit 17, so that the user can start the title information automatic appending processing at any desired time by merely manipulating the command manipulation keys or the like regardless of whether he/she has installed or downloaded the updated title information.

In a case where the title information appended to the audio data is wrong or the title information is not appended properly for some reason, it may be constituted in such a manner that the user displays all the folders in the storage region ST on the display unit 18 to conduct a search, and when the user points out a folder having an error by a predetermined delete key or the like in the manipulation unit 17, the second control unit 11 automatically deletes the wrong title information or the improperly appended title information from the folder in response to the pointing.

Further, it may be constituted in such a manner that after the wrong title information or the improperly appended title information is automatically deleted, the title information automatic appending processing is started automatically, so that appropriate title information found from the other title information recorded in the database region DB is appended. In this case, appropriate title information is selected and appended by searching for the title information related to the deleted title information again. Also, it may be constituted in such a manner that when the audio data is reproduced from the optical disc 2 and recorded into the storage region DB, the management data ATR or ATR' is recorded as unexceptionally being stored in the respective folders, so that after the wrong title information or the improperly appended title information is automatically deleted, appropriate title information is searched again based on the management data ATR or ATR'.

Also, the embodiment above described a case where the audio data recorded in a CD is recorded into the hard disk 4. It should be appreciated, however, that, according to the present invention, an information recording medium as the original source from which the audio data is reproduced is not limited to the CDs, and DVDs (Digital Versatile Discs) and MDs (Mini Discs) are also applicable. Also, an information recording medium as a destination to which the reproduced audio data is recorded is not limited to the hard disk 4, and any other type of information recording medium is applicable.

Also, the embodiment above discussed a case where the updated title information is received via the communication network NET, such as the Internet, and downloaded into the database region DB. It should be appreciated, however, that the updated title information is received via any other communication medium, such as the digital TV broadcasting and CATV, and downloaded into the database region DB.

Also, the embodiment above described the information recording and reproducing apparatus 1, which is a so-called dedicated device for performing information reproducing and information recording. It should be appreciated, however, that the present invention is not limited to the dedicated device. In other words, it may be constituted as follows. That is, the step of the reproducing and recording processing described with reference to the flowchart in Fig. 2. and the step of the title information automatic appending processing described with reference to the flowchart in Fig. 3 are recorded into an information recording medium, such as a CD or a DVD, as a computer program (title information appending procedure program) executable by a microprocessor or the like. Then, the information recording medium is distributed to the user, so that the user installs the title information appending procedure program into an electronic device (for example, a personal computer) enclosing a microprocessor or the like for execution.

When the present invention is provided in the form of an information recording medium in this manner, the present invention can be applied extensively to electronic devices provided with reproducing means and recording device.

Also, the distribution form is not limited to the information recording medium, and the title information appending procedure program may be sent (distributed) to an electronic device, such as a personal computer, via a communication network, such as the Internet, so that it is downloaded for execution.

As has been described, according to the information recording and reproducing apparatus and the method of appending title information of the present invention, it is constituted as follows. That is. when the program information obtained by reproducing an information recording medium or the program information obtained via the communication network is recorded into the first recording unit, the title information pre-recorded in the second recording unit is searched. In case that the title information corresponding to the program information is found, the title information is appended to the program information so as to be recorded into the first recording unit. In case that the title information is not found, the flag information indicating the absence of the title information is appended to the program information so as to be recorded into the first recording unit. Consequently, when the user is trying to search for the program information already recorded, for example, he/she can easily distinguish the program information not appended with the title information from the program information appended with the title information. Also, it is possible to provide a material, on which the user decides whether the title information needs to be updated or not. As a result, it is possible to provide more convenient use for the user, etc.

Also, it is constituted as follows. That is, when the updated title information is recorded into the second recording unit, the title information corresponding to the program information appended with the information indicating the absence of the title information is automatically searched through the updated title information. Then, when the corresponding title information is found, the title information is appended to the program information so as to be recorded into the first recording unit. Hence, it is possible to automatically append the title information to the program information to which the title information has not been appended, and provides the same to the user. Consequently, the user can handle the program information automatically appended with the title information without performing time-consuming manipulations. Thus, it is possible to provide more convenient use for the user, etc.

Also, it is constituted in such a manner that the second recording unit after updating is searched through based on the management information for managing the program information appended with the information indicating the absence of the title information. Hence, it is possible to improve the accuracy and the like in searching the title information corresponding to the program information.

Also, it is constituted in such a manner that the updated title information can be obtained by way of an information recording medium or via the communication network. Hence, a variety of options can be offered as the method of obtaining the updated title information, thereby making it possible to provide more convenient use for the user.

Also, according to the program recording medium having recorded the title information appending procedure program of the present invention, by installing the title information appending procedure program into an electronic device provided with a microprocessor or the like (for example, a personal computer) for execution, it is possible to allow the electronic device to handle the title information appending processing in the same manner as the information recording and reproducing apparatus serving as a so-called dedicated device. In other words, it is possible to execute the processing by an electronic device including a microprocessor or the like, such as a personal computer, in the same manner as by the information recording and reproducing apparatus of the present invention.

Consequently, the present invention can be applied extensively to electronic devices provided with CD reproducing means or DVD reproducing means and hard disk recording device, thereby making it possible to provide more convenient use for the user.

While there has been described what are at present considered to be preferred embodiments of the present invention, it will be understood that various modifications may be made thereto, and it is intended that the appended claims cover all such modifications as fall within the true spirit and scope of the invention.

## Claims

1. An information recording and reproducing apparatus for recording program information reproduced from an information recording medium (2) or program information supplied via a communication network (NET) into recording device (5), said apparatus comprising:
a first recording unit, provided in said recording device (5), for recording said program information reproduced from the information recording medium (2) or said program information supplied via the communication network (NET);
a second recording unit, provided in said recording device (5), for pre-recording title information corresponding to said program information; and
control means (11) for, when said program information is recorded into said first recording unit, (a) obtaining management information for managing said program information recorded in the information recording medium (2) or supplied via the communication network (NET), (b) in case that the title information corresponding to said program information is obtained by searching through said second recording unit based on the management information obtained, appending the title information obtained to said program information so as to be recorded into said first recording unit, and (c) in case that the title information corresponding to said program information is not obtained by searching through said second recording unit based on the management information obtained, appending information indicating an absence of the title information to said program information so as to be recorded into said first recording unit.

2. The information recording and reproducing apparatus according to claim 1, wherein, when updated title information is supplied by way of an information recording medium (2) or via the communication network (NET), said control means (11) records said updated title information into said second recording unit, and searches through said second recording unit (after updating) for the title information corresponding to said program information appended with the information indicating the absence of the title information, and when the title information corresponding to said program information is obtained, said control means appends the title information obtained to said program information so as to be recorded into said first recording unit.

3. The information recording and reproducing apparatus according to claim 2, wherein said control means (11) searches through said second recording unit after updating, based on the management information for managing said program information appended with the information indicating the absence of the title information.

4. The information recording and reproducing apparatus according to claim 2, further comprising one of the followings:
reproducing means (12) for reproducing the information recording medium (4) having recorded the updated title information; and
receiving means (15) for receiving the updated title information supplied via the communication network (NET).

5. A method of appending title information for appending title information to program information reproduced from an information recording medium (2) or program information supplied via a communication network (NET) so as to be recorded into recording device (5), said method comprising:
the step of recording said program information reproduced from the information recording medium (2) or said program information supplied via the communication network (NET) into a first recording unit provided in said recording device (5);
the step of, when said program information is recorded into said first recording unit, obtaining management information for managing said program information recorded in the information recording medium (2) or supplied via the communication network (NET), and, based on the management information obtained, searching through a second recording unit equipped in said recording device (5) provided for pre-recording title information corresponding to said program information; and
the step of appending the title information to said program information so as to be recorded into said first recording unit when the title information corresponding to said program information is obtained in said step of searching, and appending information indicating an absence of the title information to said program information so as to be recorded into said first recording unit when the title information corresponding to said program information is not obtained in said step of searching.

6. The method of appending title information according to claim 5, further comprising:
the step of obtaining updated title information when the updated title information is supplied by way of an information recording medium (2) or via the communication network (NET);
the step of recording the updated title information obtained into said second recording unit, and searching through said second recording unit (after updating) for the title information corresponding to said program information appended with the information indicating the absence of the title information; and
the step of appending the title information to said program information so as to be recorded into said first recording unit when the title information corresponding to said program information is obtained by searching through said second recording unit after updating.

7. The method of appending title information according to claim 6, wherein, in said step of searching through said second recording unit after updating, said second recording unit after updating is searched through based on the management information for managing said program information appended with the information indicating the absence of the title information.

8. A program recording medium having recorded a title information appending procedure program for allowing a computer to execute a process to append title information to program information reproduced from an information recording medium (2) or program information supplied via a communication network (NET) so as to be recorded into recording device (5), the title information appending procedure comprising:
the procedural step of recording said program information reproduced from the information recording medium (2) or said program information supplied via the communication network (NET) into a first recording unit provided in said recording device (5);
the procedural step of, when said program information is recorded into said first recording unit, obtaining management information for managing said program information recorded in the information recording medium (2) or supplied via the communication network (NEC), and, based on the management information obtained, searching through a second recording unit equipped in said recording device (5) provided for pre-recording the title information corresponding to said program information, and
the procedural step of appending the title information to said program information so as to be recorded into said first recording unit when the title information corresponding to said program information is obtained in said procedural step of searching, and appending information indicating an absence of the title information to said program information so as to be recorded into said first recording unit when the title information corresponding to said program information is not obtained in said procedural step of searching.

9. The program recording medium having recorded a title information appending procedure program according to claim 8, further comprising:
the procedural step of obtaining updated title information when the updated title information is supplied by way of an information recording medium (2) or via the communication network (NET);
the procedural step of recording the updated title information obtained into said second recording unit, and searching through said second recording unit after updating for the title information corresponding to said program information appended with the information indicating the absence of the title information; and
the procedural step of appending the title information to said program information so as to be recorded into said 'first recording unit when the title information corresponding to said program information is obtained by searching through said second recording unit after updating.

10. The program recording medium having recorded a title information appending procedure program according to Claim 9, wherein said procedural step of searching through said second recording unit after updating includes the procedural step of searching through said second recording unit (after updating) based on the management information for managing said program information appended with the information indicating the absence of the title information.
